# EUROPEAN PATENT SPECIFICATION

(11) **EP 4 394 280 B1**
(45) Date of publication and mention of the grant of the patent: **02.12.2026**
(21) Application number: 22860020.1
(22) Date of filing: 20.06.2022
(51) Int. Cl.: F25B 31/00, F25B 41/20, F25B 41/30, F25B 41/31, F25B 41/34, F25B 49/02

(54) **APPARATUS AND METHOD FOR PREVENTING COMPRESSOR FROM OIL SHORTAGE**
VORRICHTUNG UND VERFAHREN ZUR VERHINDERUNG VON ÖLMANGEL EINES VERDICHTERS
APPAREIL ET PROCÉDÉ PERMETTANT D'EMPÊCHER UNE PÉNURIE D'HUILE D'UN COMPRESSEUR

(30) Priority: 26.08.2021 CN 202110988066
(43) Date of publication of application: 03.07.2024
(73) Proprietor: Zhejiang Geely Holding Group Co., Ltd, Hangzhou, Zhejiang 310051 (CN); Zhejiang Liankong Technologies Co., Ltd, Ningbo, Zhejiang 315336 (CN)
(72) Inventor: HU, Lei, Hangzhou, Zhejiang 310051 (CN); XIA, Songyong, Hangzhou, Zhejiang 310051 (CN); LI, Guibin, Hangzhou, Zhejiang 310051 (CN); LIU, Zhenrong, Hangzhou, Zhejiang 310051 (CN); WANG, Jian, Hangzhou, Zhejiang 310051 (CN); LI, Changlong, Hangzhou, Zhejiang 310051 (CN)
(74) Representative: 2K Patent Partnerschaft mbB
(86) International application number: PCT/CN2022/099793
(87) International publication number: WO 2023/024673

(56) References cited:
- CN-A- 101 338 961
- CN-A- 102 980 327
- CN-A- 104 764 253
- CN-A- 104 764 253
- CN-A- 105 066 494
- CN-A- 113 654 275
- CN-A- 113 803 919
- CN-B- 105 156 317
- CN-U- 212 481 755
- JP-A- 2009 133 524

## Description

### TECHNICAL FIELD

The invention relates to a field of vehicle interior air conditioning, specifically relates to a device and a method for preventing a compressor from oil shortage.

### BACKGROUND

Heat pump systems are increasingly being used in the air conditioning of electric vehicles. However, the heat pump system has the following problems in a low-temperature heat pump heating mode or a refrigeration mode that due to a low ambient temperature, the viscosity of the refrigerant on the low pressure side is high, which enables the compressor oil dissolved in the refrigerant, and the compressor oil return is difficult, which eventually leads to a compressor oil shortage or even a damage accident. At the same time, the conventional heat pump systematization cannot effectively diagnose the difficulty of compressor oil return and whether the compressor lacks oil, and there is no mature detecting method for the compressor oil content.

CN 104 764 253 A discloses a refrigerating system comprising a device for preventing a compressor from an oil shortage according to the preamble of claim 1. The refrigerating system comprises a compressor, an oil separator, a second throttling element having throttling pressure-reducing function and used for adjusting the flow of the liquid, and two temperature detecting devices. The compressor has a gas discharge opening and a gas return opening, the lower part of the side wall of the compressor is provided with an oil mass detecting port, and a detecting access line is connected between the oil mass detecting port and the gas return opening. The oil separator has an inlet and an oil return opening, the inlet is connected with a gas discharge opening, and a first throttling element having throttling pressure-reducing function and used for adjusting the flow of the lubricating oil is serially connected between the oil return opening and the gas return opening. The second throttling element is serially connected to the detecting access line. The two temperature detecting devices are respectively used for detecting the temperatures of the liquid at two ends of the second throttling element, while the second throttling element is opened and the temperature difference ΔT between the temperatures detected by two temperature detecting devices is greater than the stated value, the first throttling element is opened. The refrigerating system is capable of automatically judging whether the compressor needs to return the oil, and achieving the oil return according to need.

### SUMMARY

The invention is set out in the appended set of claims.

In summary, the disclosure detects the oil content of the low-pressure side of the compressor through the oil content detecting assembly, and transmits the detecting result to the controller. When the compressor lacks oil, the controller controls the stopping valve and the first flow regulating component to be turned off and controls the compressor to run. During operation, the compressor relies on its pumping power to suck the oil in the evaporator and oil content detecting assembly into itself, thereby realizing the oil return. Therefore, the disclosure can effectively improve a problem that the conventional compressor lacks oil in the heating mode or the refrigeration mode.

In addition, the disclosure further provides a detecting method for the compressor oil shortage, which is easy to implement, has accurate results, and ensures that the oil content of the compressor is within an appropriate range. At the same time, the disclosure further provides the integrated gas-liquid separator that integrates an oil content detecting module and the stopping valve to detect the oil content of the compressor in real time, which ensures a safety of the compressor and improves a degree of a system integration.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic structural view of a device for preventing a compressor from an oil shortage according to an embodiment of the invention.
FIG. 2 is a schematic electrical connection view of a device for preventing a compressor from an oil shortage of the invention.
FIG. 3 is a schematic flowchart of a method for preventing a compressor from an oil shortage according to an embodiment of the invention.
FIG. 4 is a schematic structural view of an integrated gas-liquid separator which can be used in a device for preventing a compressor from an oil shortage according to an embodiment of the disclosure.
FIG. 5 is a cross-sectional view of an end part of the integrated gas-liquid separator .
FIG. 6 is a cross-sectional view of an SOV stopping valve not according to the present invention.

### PART NUMBER DESCRIPTION

1-stopping valve, 2-first flow regulating component, 3-oil content detecting assembly, 4-controller, 5-compressor, 6-condenser, 7-evaporator, 8-gas-liquid separator, 9-first sensor, 10-second flow regulating component, 11-second sensor, 12-closed circuit, 13-bypass, 14-integrated gas-liquid separator, 15-gas-liquid separator body, 16-first outlet, 17-second outlet, 18-first tube, 19-air return inlet, 20-inlet, 21-outlet.

### DETAILED DESCRIPTION

The following describes the implementation of the invention through specific embodiments, and those skilled in the art can easily understand other advantages and effects of the disclosure from the content disclosed in this specification. The disclosure may also be implemented or applied through other different specific embodiments. It should further be understood that the terms used in the examples of the disclosure are used to describe specific embodiments, instead of limiting the protection scope of the disclosure. The test methods that do not indicate specific conditions in the following examples are usually in accordance with conventional conditions, or conditions recommended by each manufacturer.

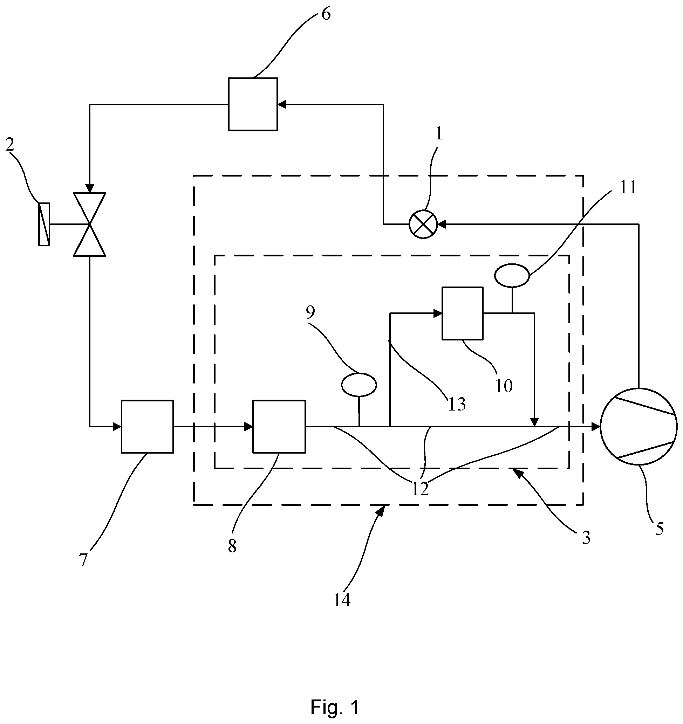

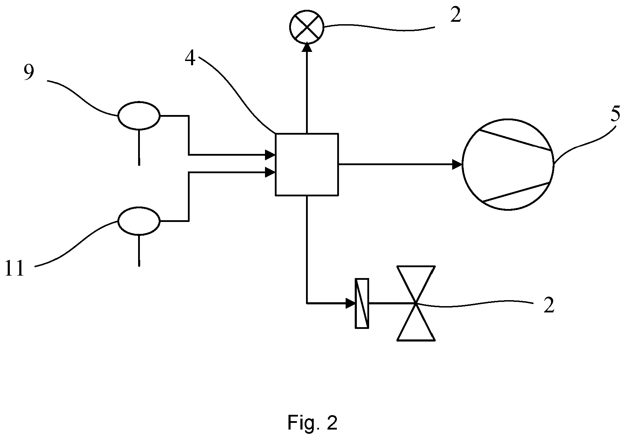

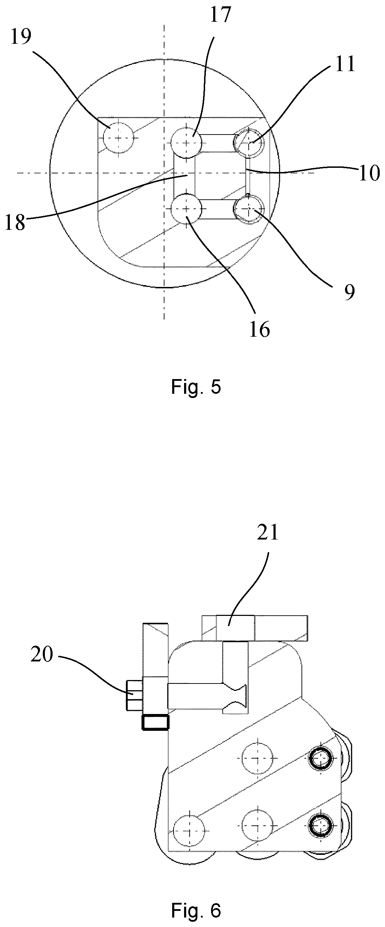

Please refer to FIG. 1 through FIG. 6. It should be noted that the structure, proportion, size, etc. shown in the drawings attached to this specification are only used to cooperate with the contents disclosed in the description for the understanding and reading of persons familiar with the technology, and are not used to limit the limitations that may be implemented by the disclosure, so there is no technical substantive significance. At the same time, it should be noted that terms "upper", "lower", "left", "right", "middle" and "one" quoted in this specification are only for a convenience of description, and are not used to limit a scope of the disclosure.

When an embodiment gives a range of values, it should be understood that, unless otherwise specified in the disclosure, two endpoints of each range of values and any one of the values between the two endpoints may be selected.

Please refer to FIG. 1 through FIG. 2. The present invention provides a device and a method to prevent a compressor oil shortage to improve a problem of oil shortage in conventional compressors in a heating mode or a cooling mode. An integrated gas-liquid separator which may be used in a device or method according to the invention is disclosed. The device to prevent a compressor oil shortage includes a stopping valve 1, a first flow regulating component 2, an oil content detecting assembly 3, and a controller 4. Wherein, the stopping valve is arranged on a first communicating tube between the compressor 5 and a condenser 6. The first flow regulating component 2 is arranged on a second communicating tube between the condenser 6 and an evaporator 7. The oil content detecting assembly 3 is arranged on a third communicating tube between the evaporator 7 and the compressor 5. The controller 4 receives a signal of the oil content detecting assembly 3 and controls the stopping valve 1 and the first flow regulating component 2.

The oil content detecting assembly 3 is arranged on a low-pressure return air side of the compressor 5, used for detecting the oil content and transmitting a detecting result to the controller 4. The controller 4 determines whether the compressor 5 is short of oil according to the detecting result. When the compressor 5 is short of the oil, the controller 4 closes the stopping valve 1 and the first flow regulating component 2 and runs the compressor 5. The compressor 5 relies on its pumping power to suck the oil in the evaporator 7 and the oil content detecting assembly 3 to realize oil return and improve an oil shortage situation.

Please refer to FIG. 1. The oil content detecting assembly 3 includes a gas-liquid separator 8, a first sensor 9, a second flow regulating component 10, and a second sensor 11, and the gas-liquid separator 8 is connected with the evaporator 7 and the compressor 5 respectively. A bypass 13 is arranged on a passage 12 between the gas-liquid separator 8 and the compressor 5, and the second flow regulating component 10 is arranged on the bypass 13. The first sensor 9 is located at an upstream of the second flow regulating component 10, for example, arranged on the passage 12 between the gas-liquid separator 8 and the compressor 5 and located at an upstream of the bypass 13; or arranged on the bypass 13 and located at an upstream of the second flow adjustment part 10. The second sensor 11 is located on the bypass 13 and is located at a downstream of the second flow regulating component 10, and the first sensor 9 and the second sensor 11 respectively transmit detected information to the controller 4.

The return air of the compressor 5 includes refrigerant and oil. When the refrigerant encounters the second flow regulating component 10, its temperature may change, while a temperature of the oil does not change, so the controller 4 may determine a proportion of an oil content (0-100%) of return air according to a degree of temperature change, and determine whether the compressor 5 is in an oil shortage state by this. The first sensor 9 and the second sensor 11 upload the detecting result to the controller 4 in real time, which realizes a real-time detection of the oil content of the compressor 5 by the controller 4. When the compressor 5 is detected to be in the oil shortage state, the controller 4 controls an operation of the compressor 5, and the compressor 5 relies on its own pumping power to suck the oil in the gas-liquid separator 8 and the evaporator 7 into the compressor 5, so as to realize the oil return, thereby alleviating the oil shortage of the compressor 5.

In an embodiment of the disclosure, the stopping valve 1 is an electromagnetic control valve, which means an SOV (Solenoid Operated Valve) stopping valve. The SOV stopping valve is simple in structure, low cost, easy to control, and conducive to an integration with the gas-liquid separator. The first flow regulating component 2 is an electronic expansion valve. The second flow regulating component 10 is one of the electronic expansion valve, the thermal expansion valve and the short throttle tube.

In an embodiment of the disclosure, the first flow regulating component includes a thermal expansion valve and a first controlling valve, the thermal expansion valve connects in series with the first controlling valve, the first controlling valve is controlled by the controller, and the first controlling valve may be the stopping valve.

In an embodiment of the disclosure, the first flow regulating component includes a short throttle tube and a second controlling valve, the short throttle tube connects in series with the second controlling valve, the second controlling valve is controlled by the controller, and the second controlling valve may be the stopping valve.

Please refer to FIG. 1. In an embodiment of the disclosure, the first sensor 9 and/or the second sensor 11 are pressure-temperature sensors. The first sensor 9 is used for detecting a temperature and pressure of the upstream of the second flow regulating component 10, and transmits a result to the controller 4. The second sensor 11 is used for detecting a temperature and pressure of the bypass 13 after being regulated by the second flow regulating component 10, and transmits the result to the controller 4. The controller 4 determines the oil content of the return air of the compressor 5 according to the detecting results of the two sensors, and determines whether the compressor 5 is short of oil based on this. A signal transmission between two sensors and the controller 4 may be transmitted in a wired mode or in a wireless mode, wherein the wired mode may be a signal line connection or an electrical connection, and the wireless mode may be a Bluetooth, infrared, radio, communication network (such as 2G, 4G, 5G etc.) or broadband wireless network etc.

Please refer to FIG. 1, FIG. 4 and FIG. 5. In an embodiment of the disclosure, the gas-liquid separator 8, the stopping valve 1, the first sensor 9, the second flow regulating component 10, the second sensor 11 and the bypass 13 are integrated. An integration mode may adopt a following integration mode of an integrated gas-liquid separator 14, wherein the gas-liquid separator 8 is equivalent to a gas-liquid separator body 15. A following first tube 18 is a part of the passage 12 described in this embodiment.

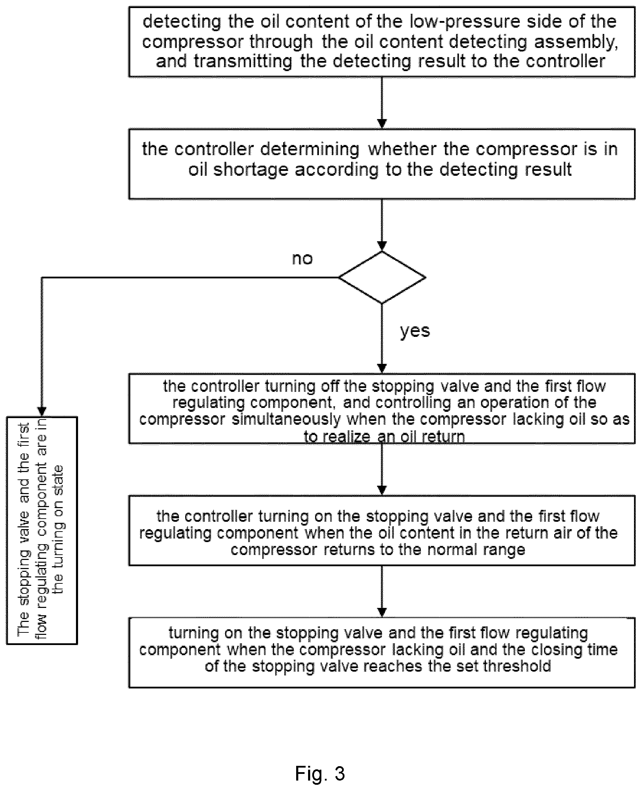

Please refer to FIG. 3. The disclosure further provides a method to prevent the compressor oil shortage, which includes: detecting oil content of a low-pressure side of the compressor through the oil content detecting assembly, and transmitting a detecting result to the controller; the controller determining whether the compressor lacks oil according to the detecting result; and when the detecting result is that the compressor lacks oil, the controller turning off the stopping valve and the first flow regulating component, and controlling an operation of the compressor simultaneously to realize an oil return. When the oil content in the return air of the compressor returns to a normal range, the controller turns on the stopping valve and the first flow regulating component.

Please refer to FIG. 3. In an embodiment of the disclosure, the method further includes: when the detecting result is that the compressor is not short of oil, the stopping valve and the first flow regulating part remain are kept being on.

Please refer to FIG. 3. In an embodiment of the disclosure, the method further includes: when the compressor lacks oil and a closing time of the stopping valve reaches a set threshold, then turning on the stopping valve and the first flow regulating component. The set threshold is less than or equal to two minutes. In order to ensure a safe operation of the compressor, under a condition of the oil shortage of the compressor 5, a closing time of SOV stopping valve is from 10S to 20S, and a low-frequency speed of the compressor 5 is less than or equal to 2000 rpm/min.

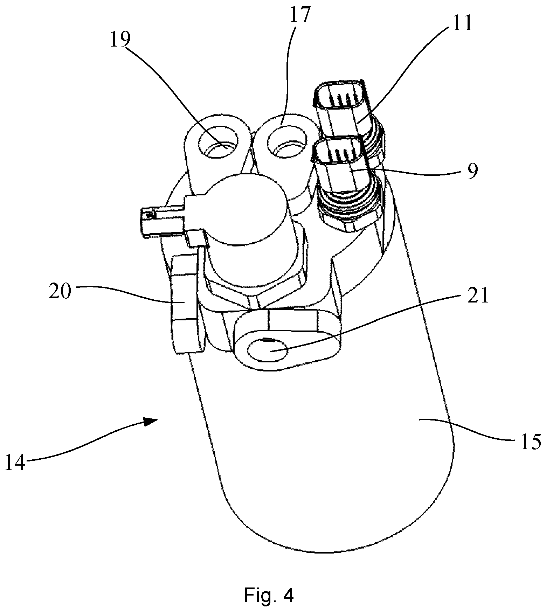

Please refer to FIG. 4 through FIG. 5. The disclosure further provides the integrated gas-liquid separator 14 that integrates the stopping valve 1 and the oil content detecting assembly 3. The integrated gas-liquid separator 14 includes the gas-liquid separator body 15, the second flow regulating component 10, the first sensor 9, the second sensor 11 and the stopping valve 1. Wherein, the gas-liquid separator body 15 is provided with a first outlet inside 16 and a second outlet 17 at its end part. A first tube 18 and the bypass 13 are arranged between the first outlet 16 and the second outlet 17, and the first tube 18 is connected in parallel with the bypass 13. The second flow regulating component 10 is arranged on the bypass 13. The first sensor 9 is arranged on the bypass 13 and located at the upstream of the second flow regulating component 10. The second sensor 11 is arranged on the bypass 13 and located at the downstream of the second flow regulating component 10. The stopping valve 1 is arranged at an end part of the gas-liquid separator body 15 and controls tubes between the compressor 5 and the condenser 6.

Please refer to FIG. 4 through FIG. 6. The end part of the gas-liquid separator body 15 is further provided with air return inlet 19, and the return air enters the gas-liquid separator body 15 from the air return inlet 19, flows out from the first outlet 16, and then flows into the second outlet 17 through the first tube 18 and the bypass 13. The second outlet 17 is a total outlet and is used for connecting with the compressor 5. The stopping valve 1 is provided with an inlet 20 and an outlet 21, and the inlet 20 is perpendicular to the outlet 21.

In an embodiment of the disclosure, the integrated gas-liquid separator further includes the controller 4 (not labeled). The controller 4 is detachably arranged on the gas-liquid separator body 15 and used to receive the detection signal of the first sensor 9 and the second sensor 11 and control the first flow regulating component 2. The first flow regulating component 2 is arranged on the tube between the condenser 6 and the evaporator 7. Through the above-mentioned integrated gas-liquid separator, a problem of oil shortage in the compressor can be effectively solved. When an application environment permits, the controller may be integrated on the gas-liquid separator body to improve a degree of integration and save space. To further increase a range of applications, the controller may be integrated into a total control system of a vehicle console.

In an embodiment of the disclosure, the first sensor 9 and/or the second sensor 11 are the pressure-temperature sensors. The first sensor 9 is used for detecting a temperature and pressure of the bypass 13 before regulated by the second flow regulating component 10, and transmitting the result to the controller. The second sensor 11 is used for detecting the temperature and pressure of the bypass 13 after being regulated by the second flow regulating component 10, and transmitting the result to the controller 4. The controller 4 determines the oil content of the return air of the compressor according to the detecting results of the two sensors, and determines whether the compressor is short of oil based on this. A signal transmission between two sensors and the controller may be transmitted in the wired mode or in the wireless mode, wherein the wired mode may be the signal line connection or an electrical connection, and the wireless mode may be the Bluetooth, infrared, radio, communication network (such as 2G, 4G, 5G etc.) or broadband wireless network etc.

In summary, the disclosure detects the oil content of the low-pressure side of the compressor 4 through the oil content detecting assembly 3, and transmits the detecting result to the controller 4. When the compressor 5 lacks oil, the controller 4 controls to turn off the stopping valve 1 and the first flow regulating component 2, and runs the compressor 5. During operation, the compressor 5 relies on its pumping power to suck the oil in the evaporator 7 and the gas-liquid separator 8 into itself, thereby realizing the oil return. Therefore, the disclosure can effectively improve a problem that the conventional compressor lacks oil in the heating mode or the refrigeration mode. Therefore, the disclosure effectively overcomes some practical problems in the prior art, thereby having high utilization value and use significance.

The above embodiments only illustrate principles and effects of the disclosure, but are not intended to limit the disclosure. Anyone familiar with this technology may modify or change the above embodiments without departing from a scope of the disclosure.

## Claims

1. A device for preventing a compressor (5) from an oil shortage, comprising:
a stopping valve (1), configured to be arranged on a first communicating tube, the first communicating tube connectable between the compressor (5) and a condenser (6);
a first flow regulating component (2), configured to be arranged on a second communicating tube, the second communicating tube connectable between the condenser (6) and an evaporator (7);
an oil content detecting assembly (3), configured to be arranged on a third communicating tube, the third communicating tube connectable between the evaporator (7) and the compressor (5); and
a controller (4), configured to receive a signal of the oil content detecting assembly (3) and control the compressor (5);
wherein the oil content detecting assembly (3) comprises a gas-liquid separator (8), a passage (12), a first sensor (9), a second flow regulating component (10), and a second sensor (11), the gas-liquid separator (8) is configured to be connected with the evaporator (7) and the compressor (5) respectively, a bypass (13) is arranged on the passage (12) between the gas-liquid separator (8) and the compressor (5), the second flow regulating component (10) is arranged on the bypass (13), the first sensor (9) is located at an upstream of the second flow regulating component (10), the second sensor (11) is located on the bypass (13) and is located at a downstream of the second flow regulating component (10), and the first sensor (9) and the second sensor (11) respectively transmit detected information to the controller (4);
the oil content detecting assembly (3) is configured to detect oil content of a low-pressure side of the compressor (5) and transmit a detecting result to the controller (4);
the controller (4) is configured to determine whether the compressor (5) is in oil shortage according to the detecting result;
**characterised in that** the controller (4) is configured to control the stopping valve (1) and the first flow regulating component (2); and to turn off the stopping valve (1) and the first flow regulating component (2) and to control an operation of the compressor (5) simultaneously when the compressor (5) lacks oil.

2. The device for preventing a compressor from an oil shortage according to claim 1, wherein, the stopping valve (1) is an electromagnetic control valve.

3. The device for preventing a compressor from an oil shortage according to claim 1, wherein, the first flow regulating component (2) is an electronic expansion valve.

4. The device for preventing a compressor from an oil shortage according to claim 1, wherein, the second flow regulating component (10) is one of an electronic expansion valve, a thermal expansion valve or a short throttle tube.

5. The device for preventing a compressor from an oil shortage according to claim 1, wherein, the first sensor (9) and/or the second sensor (11) are pressure-temperature sensors.

6. The device for preventing a compressor from an oil shortage according to claim 1, wherein, the gas-liquid separator (8), the stopping valve (1), the first sensor (9), the second flow regulating component (10) and the second sensor (11) are integrated.

7. A method implemented by the device in any one of claims 1 to 6, comprising:
detecting oil content of a low-pressure side of the compressor (5) through the oil content detecting assembly (3), and transmitting a detecting result to the controller (4);
the controller (4) determining whether the compressor (5) is in oil shortage according to the detecting result; and
the controller (4) turning off the stopping valve (1) and the first flow regulating component (2) and controlling an operation of the compressor (5) simultaneously when the compressor lacks (5) oil, so as to realize an oil return.

8. The method according to claim 7, further comprising: turning on the stopping valve (1) and the first flow regulating component (2) when the compressor (5) is in oil shortage and a closing time of the stopping valve (1) reaches a set threshold.

## Patentansprüche

1. Vorrichtung zur Verhinderung von Ölmangel eines Verdichters (5), umfassend:
ein Absperrventil (1), das zur Anordnung an einer ersten Verbindungsleitung eingerichtet ist, wobei die erste Verbindungsleitung zwischen dem Verdichter (5) und einem Kondensator (6) anschließbar ist;
eine erste Durchflussregelkomponente (2), die zur Anordnung an einer zweiten Verbindungsleitung eingerichtet ist, wobei die zweite Verbindungsleitung zwischen dem Kondensator (6) und einem Verdampfer (7) anschließbar ist;
eine Ölgehaltserfassungsbaugruppe (3), die zur Anordnung an einer dritten Verbindungsleitung eingerichtet ist, wobei die dritte Verbindungsleitung zwischen dem Verdampfer (7) und dem Verdichter (5) anschließbar ist; und
eine Steuereinrichtung (4), die dazu eingerichtet ist, ein Signal der Ölgehaltserfassungsbaugruppe (3) zu empfangen und den Verdichter (5) zu steuern;
wobei die Ölgehaltserfassungsbaugruppe (3) einen Gas-Flüssigkeits-Abscheider (8), einen Strömungsweg (12), einen ersten Sensor (9), eine zweite Durchflussregelkomponente (10) und einen zweiten Sensor (11) umfasst, wobei der Gas-Flüssigkeits-Abscheider (8) zur Verbindung mit dem Verdampfer (7) und dem Verdichter (5) eingerichtet ist, wobei ein Bypass (13) an dem Strömungsweg (12) zwischen dem Gas-Flüssigkeits-Abscheider (8) und dem Verdichter (5) angeordnet ist, wobei die zweite Durchflussregelkomponente (10) an dem Bypass (13) angeordnet ist, der erste Sensor (9) stromaufwärts der zweiten Durchflussregelkomponente (10) angeordnet ist, der zweite Sensor (11) an dem Bypass (13) und stromabwärts der zweiten Durchflussregelkomponente (10) angeordnet ist und der erste Sensor (9) und der zweite Sensor (11) jeweils erfasste Informationen an die Steuereinrichtung (4) übertragen;
wobei die Ölgehaltserfassungsbaugruppe (3) dazu eingerichtet ist, einen Ölgehalt auf einer Niederdruckseite des Verdichters (5) zu erfassen und ein Erfassungsergebnis an die Steuereinrichtung (4) zu übertragen;
wobei die Steuereinrichtung (4) dazu eingerichtet ist, anhand des Erfassungsergebnisses zu bestimmen, ob sich der Verdichter (5) in einem Ölmangelzustand befindet;
**dadurch gekennzeichnet, dass** die Steuereinrichtung (4) dazu eingerichtet ist, das Absperrventil (1) und die erste Durchflussregelkomponente (2) zu steuern und, wenn sich der Verdichter (5) in einem Ölmangelzustand befindet, gleichzeitig das Absperrventil (1) und die erste Durchflussregelkomponente (2) zu schließen und den Betrieb des Verdichters (5) zu steuern.

2. Vorrichtung zur Verhinderung von Ölmangel eines Verdichters nach Anspruch 1, wobei das Absperrventil (1) ein elektromagnetisches Steuerventil ist.

3. Vorrichtung zur Verhinderung von Ölmangel eines Verdichters nach Anspruch 1, wobei die erste Durchflussregelkomponente (2) ein elektronisches Expansionsventil ist.

4. Vorrichtung zur Verhinderung von Ölmangel eines Verdichters nach Anspruch 1, wobei die zweite Durchflussregelkomponente (10) ein elektronisches Expansionsventil, ein thermostatisches Expansionsventil oder ein kurzes Drosselrohr ist.

5. Vorrichtung zur Verhinderung von Ölmangel eines Verdichters nach Anspruch 1, wobei der erste Sensor (9) ein Druck-Temperatur-Sensor ist und/oder der zweite Sensor (11) ein Druck-Temperatur-Sensor ist.

6. Vorrichtung zur Verhinderung von Ölmangel eines Verdichters nach Anspruch 1, wobei der Gas-Flüssigkeits-Abscheider (8), das Absperrventil (1), der erste Sensor (9), die zweite Durchflussregelkomponente (10) und der zweite Sensor (11) integriert sind.

7. Verfahren, das mittels der Vorrichtung nach einem der Ansprüche 1 bis 6 durchgeführt wird, umfassend:
Erfassen eines Ölgehalts auf einer Niederdruckseite des Verdichters (5) mittels der Ölgehaltserfassungsbaugruppe (3) und Übertragen eines Erfassungsergebnisses an die Steuereinrichtung (4);
Bestimmen durch die Steuereinrichtung (4) anhand des Erfassungsergebnisses, ob sich der Verdichter (5) in einem Ölmangelzustand befindet; und
gleichzeitiges Schließen des Absperrventils (1) und der ersten Durchflussregelkomponente (2) und Steuern des Betriebs des Verdichters (5) durch die Steuereinrichtung (4), wenn sich der Verdichter (5) in einem Ölmangelzustand befindet, um eine Ölrückführung zu bewirken.

8. Verfahren nach Anspruch 7, ferner umfassend: Öffnen des Absperrventils (1) und der ersten Durchflussregelkomponente (2), wenn sich der Verdichter (5) in einem Ölmangelzustand befindet und eine Schließdauer des Absperrventils (1) einen festgelegten Schwellenwert erreicht.

## Revendications

1. Dispositif pour empêcher un manque d'huile d'un compresseur (5), comprenant :
une vanne d'arrêt (1), configurée pour être agencée sur un premier tube de communication, le premier tube de communication pouvant être connecté entre le compresseur (5) et un condenseur (6) ;
un premier composant de régulation de débit (2), configuré pour être agencé sur un deuxième tube de communication, le deuxième tube de communication pouvant être connecté entre le condenseur (6) et un évaporateur (7) ;
un ensemble de détection de teneur en huile (3), configuré pour être agencé sur un troisième tube de communication, le troisième tube de communication pouvant être connecté entre l'évaporateur (7) et le compresseur (5) ; et
un contrôleur (4), configuré pour recevoir un signal de l'ensemble de détection de teneur en huile (3) et commander le compresseur (5) ;
dans lequel l'ensemble de détection de teneur en huile (3) comprend un séparateur gaz-liquide (8), un passage (12), un premier capteur (9), un second composant de régulation de débit (10) et un second capteur (11), le séparateur gaz-liquide (8) est configuré pour être connecté respectivement à l'évaporateur (7) et au compresseur (5), une dérivation (13) est agencée sur le passage (12) entre le séparateur gaz-liquide (8) et le compresseur (5), le second composant de régulation de débit (10) est agencé sur la dérivation (13), le premier capteur (9) est situé en amont du second composant de régulation de débit (10), le second capteur (11) est situé sur la dérivation (13) et est situé en aval du second composant de régulation de débit (10), et le premier capteur (9) et le second capteur (11) transmettent respectivement des informations détectées au contrôleur (4) ;
l'ensemble de détection de teneur en huile (3) est configuré pour détecter la teneur en huile d'un côté basse pression du compresseur (5) et transmettre un résultat de détection au contrôleur (4) ;
le contrôleur (4) est configuré pour déterminer si le compresseur (5) est en manque d'huile selon le résultat de détection ; **caractérisé en ce que** le contrôleur (4) est configuré pour commander la vanne d'arrêt (1) et le premier composant de régulation de débit (2) ; et pour fermer la vanne d'arrêt (1) et le premier composant de régulation de débit (2) et pour commander simultanément un fonctionnement du compresseur (5) lorsque le compresseur (5) manque d'huile.

2. Dispositif pour empêcher un manque d'huile d'un compresseur selon la revendication 1, dans lequel la vanne d'arrêt (1) est une vanne de commande électromagnétique.

3. Dispositif pour empêcher un manque d'huile d'un compresseur selon la revendication 1, dans lequel le premier composant de régulation de débit (2) est un détendeur électronique.

4. Dispositif pour empêcher un manque d'huile d'un compresseur selon la revendication 1, dans lequel le second composant de régulation de débit (10) est l'un parmi un détendeur électronique, un détendeur thermostatique ou un tube d'étranglement court.

5. Dispositif pour empêcher un manque d'huile d'un compresseur selon la revendication 1, dans lequel le premier capteur (9) et/ou le second capteur (11) sont des capteurs de pression-température.

6. Dispositif pour empêcher un manque d'huile d'un compresseur selon la revendication 1, dans lequel le séparateur gaz-liquide (8), la vanne d'arrêt (1), le premier capteur (9), le second composant de régulation de débit (10) et le second capteur (11) sont intégrés.

7. Méthode mise en œuvre par le dispositif selon l'une quelconque des revendications 1 à 6, comprenant :
la détection de la teneur en huile d'un côté basse pression du compresseur (5) par l'intermédiaire de l'ensemble de détection de teneur en huile (3), et la transmission d'un résultat de détection au contrôleur (4) ;
le contrôleur (4) déterminant si le compresseur (5) est en manque d'huile selon le résultat de détection ; et
le contrôleur (4) fermant la vanne d'arrêt (1) et le premier composant de régulation de débit (2) et commandant simultanément un fonctionnement du compresseur (5) lorsque le compresseur (5) manque d'huile, de manière à réaliser un retour d'huile.

8. Méthode selon la revendication 7, comprenant en outre : l'ouverture de la vanne d'arrêt (1) et du premier composant de régulation de débit (2) lorsque le compresseur (5) est en manque d'huile et qu'un temps de fermeture de la vanne d'arrêt (1) atteint un seuil défini.
